# EUROPÄISCHE PATENTSCHRIFT

(11) **EP 0 958 991 B1**
(45) Veröffentlichungstag und Bekanntmachung des Hinweises auf die Patenterteilung: **09.07.2003**
(21) Anmeldenummer: 99102074.4
(22) Anmeldetag: 02.02.1999
(51) Int. Cl.: B62D 15/02

(54) **Ausgleichsstück für einen Lenkwinkelsensor**
Equalizing part for a steering angle sensor
Pièce d'égalisation pour un capteur de l'angle de braquage

(30) Priorität: 20.05.1998 DE 19822825
(43) Veröffentlichungstag der Anmeldung: 24.11.1999
(73) Patentinhaber: Valeo Schalter und Sensoren GmbH, 74321 Bietigheim-Bissingen (DE)
(72) Erfinder: Klein, Rudolf, 74348 Lauffen a.N. (DE); Simonis, Karl, 74366 Kirchkeim a.N. (DE); Grüner, Roland, 71732 Tamm (DE)
(74) Vertreter: Dreiss, Fuhlendorf, Steimle & Becker

(56) Entgegenhaltungen:
- DE-A- 19 712 523

## Beschreibung

Die Erfindung betrifft einen Lenkwinkelsensor mit den Merkmalen des Oberbegriffs des Anspruchs 1.

Mit der wachsenden Verbreitung von Regelsystemen zur Regelung der Fahrdynamik von Kraftfahrzeugen hat die Bedeutung von Lenkwinkelsensoren erheblich zugenommen. Derartige Sensoren haben die Aufgabe, ein Signal zu erzeugen, welches kennzeichnend für den Lenkwinkel bzw. die Lenkwinkeländerung eines Fahrzeugs ist. Hierzu ist in der Regel ein Codierelement, insbesondere eine Codierscheibe starr mit der Lenkspindel verbunden. Der Codescheibe ist eine Abtastung zugeordnet, welche gegenüber dem Chassis bzw. der Lenksäule fixiert ist und welche in der Lage ist, den Code der Codescheibe zu lesen. Ein mögliches Prinzip zur Abtastung der Codescheibe kann in einer optischen Abtastung bestehen. Dabei sind an der Scheibe etwa in Form von Zähnen Markierungen angebracht, welche durch eine optische Lichtschranke abgetastet werden. Die Abtasteinrichtung, die aus einer Leuchtdiode und einem Lichtempfänger bzw. einer Mehrzahl derartiger Bauelemente bestehen kann, ist gegenüber dem Gehäuse vielfach auch als Lenksäule bezeichnet, der Lenkspindel (Lenkstock) ortsfest angeordnet.

Da die zu messenden Lenkwinkel sehr genau bestimmt werden sollen, sind die zulässigen Toleranzen hinsichtlich der Codescheibe und der Lichtschranke sehr klein. Um durch die Lichtschranke die Zähne der Codescheibe abtasten zu können, ist bereits vorgeschlagen worden, die Codescheibe selber im Gehäuse des Lenkwinkelsensors drehbar zu lagern. Dabei greift ein mit der Lenkspindel gekoppelter Finger in eine Transportlasche der Codescheibe, so dass die Codescheibe der Drehbewegung der Lenkspindel folgt. Im Zusammenhang mit der Integration mehrerer an der Lenksäule angeordneter Bauelemente ist eine solche Anordnung beispielsweise in der DE-A-196 01 964 vorgeschlagen worden. Dieser Transportfinger hat im wesentlichen die Aufgabe, ausgehend von anderen direkt von der Lenkspindel angetriebenen Einrichtungen auch die axial versetzt befindliche Codescheibe antreiben zu können.

Unabhängig davon besteht auch bei der zuletzt genannten Antriebsart das Problem, dass für die Lage der Lenkspindel hinsichtlich ihres radialen Versatzes eine gewisse Toleranz berücksichtigt werden muss. Ist nun das Drehlager der Lenkspindel gegenüber der Drehachse der Codescheibe versetzt, so wird auf die Codescheibe eine radiale Kraft ausgeübt, die zur Zerstörung des Lenkwinkelsensors führen kann oder zumindest die Genauigkeit seiner Messergebnisse stark beeinflusst. Ist dagegen, wie bei vielen Einrichtungen, die Codescheibe direkt mit der Lenkspindel gekoppelt, so kann die Codescheibe ihre Lage gegenüber der Abtasteinrichtung bzw. Lichtschranke verschieben, wodurch die gleichen Schwierigkeiten auftreten. Die o.g. Verhältnisse sind nicht auf die Abtastung mit optischen Lichtschranken beschränkt. Sie treten in analoger Form auch bei magnetischer Abtastung oder anderen Abtastformen z.B. bei mechanischer Abtastung einer Codescheibe auf. Es ist dabei auch nicht notwendig, dass wie bei der o.a. Druckschrift die Codierung auf der Mantelfläche angebracht ist. Die genannten Probleme können ebenso auftreten, wenn die Codierung auf einer Scheibenfläche angebracht ist.

Aus der DE-A-197 12 523 ist ein Lenkwinkelsensor bekannt, bei dem eine mit der Lenkspindel drehende Codescheibe von einer Abtasteinrichtung abgetastet wird, welche gegenüber der Lenksäule fixiert ist, wobei die Codescheibe von der Lenkspindel mittelbar über ein Zwischenstück gedreht wird, welches mit der Lenkspindel drehfest verbunden ist.

Der Erfindung liegt die Aufgabe zugrunde, die Einwirkung von radialen Kräften auf die Codescheibe und/oder den Abtaster zu verhindern.

Die Aufgabe wird mit einem Lenkwinkelsensor gelöst, der die Merkmal des Anspruchs 1 aufweist.

Die Erfindung besteht im Prinzip also darin, die Tangentialkraft der Lenkspindel nicht starr auf die Codescheibe zu übertragen, sondern statt dessen ein ggf. starr mit der Lenkspindel gekoppeltes Ausgleichsstück vorzusehen, welches zwar die Tangentialkräfte der Lenkspindel weitgehend spielfrei auf die Codescheibe übertragen und diese somit in Drehrichtung antreiben. Andererseits aber zumindest in radialer Richtung eine Bewegung zwischen der Lenksäule und der Drehachse der Codescheibe zugelassen.

Um die Drehlagerung der Codescheibe zu sichern und deren radiale Beweglichkeit gegenüber dem Gehäuse einzuschränken, empfiehlt sich in Weiterbildung der Erfindung die Merkmalskombination nach Anspruch 2. Hierdurch wird sichergestellt, daß die Codescheibe ihre Lage zumindest in radialer Richtung gegenüber der Abtasteinrichtung insbesondere also den optischen Elementen nicht ändern und somit kleine Toleranzen zwischen Codescheibe und Abtasteinrichtung ermöglicht werden können. Hierdurch kann die Codescheibe entsprechend klein ausgestaltet werden, so daß sie auch in einem mehrere Baugruppen kombinierenden und an der Lenksäule befestigten Gehäuse untergebracht werden kann.

Um mit Hilfe des Ausgleichsstücks auch die Ausübung von axialen Kräften von der Lenkspindel auf die Codescheibe zu verhindern, empfiehlt sich in Weiterbildung der Erfindung die Anwendung der Merkmalskombination nach Anspruch 3. Danach sind Ausgleichsstück und Codescheibe zueinander in axialer Richtung schwimmend gelagert. Wichtig aber ist vor allen Dingen, daß in radialer Richtung die Codescheibe gegenüber Ausgleichsstück und damit Lenkspindel schwimmend gelagert ist.

Eine einfache Ausgestaltung, durch welche sich die erfinderische Idee verwirklichen läßt, ergibt sich aus den Merkmalen nach Anspruch 4. Dabei ist zumindest ein in axialer Richtung weisender Vorsprung vorgesehen, der in eine sich in radialer Richtung erstreckende Ausnehmung eintaucht. Die Seitenwände der Ausnehmung sind dabei in der Lage, von dem Zapfen ausgehende oder auf den Zapfen ausgeübte Kräfte aufzunehmen bzw. auf den Zapfen zu übertragen. Da der Vorsprung aber in radialer Richtung verläuft, findet der Vorsprung dort keine Wände vor, über welche Kräfte in radialer Richtung übertragen werden könnten. Entsprechendes gilt für die axiale Richtung, da der Zapfen sich in dieser Richtung frei bewegen kann. Dies gilt insbesondere dann, wenn die Ausnehmung eine Durchgangsöffnung ist. Eine sich in der Praxis bewährende Konkretisierung zu den Merkmalen nach Anspruch 4 stellt die Merkmalskombination nach Anspruch 5 dar. Danach ist die Ausnehmung ein sich in radialer Richtung erstreckendes durchgehendes Langloch. Eingangs wurde schon erläutert, daß die Codescheibe der Drehbewegung der Lenkspindel präzise folgen muß. Dies gilt dementsprechend auch für das Ausgleichsstück, welches die Codescheibe antreibt. Eine einfache drehfeste Fixierung des Ausgleichsstücks auf der Lenkspindel ergibt sich aus der Merkmalskombination nach Anspruch 6.

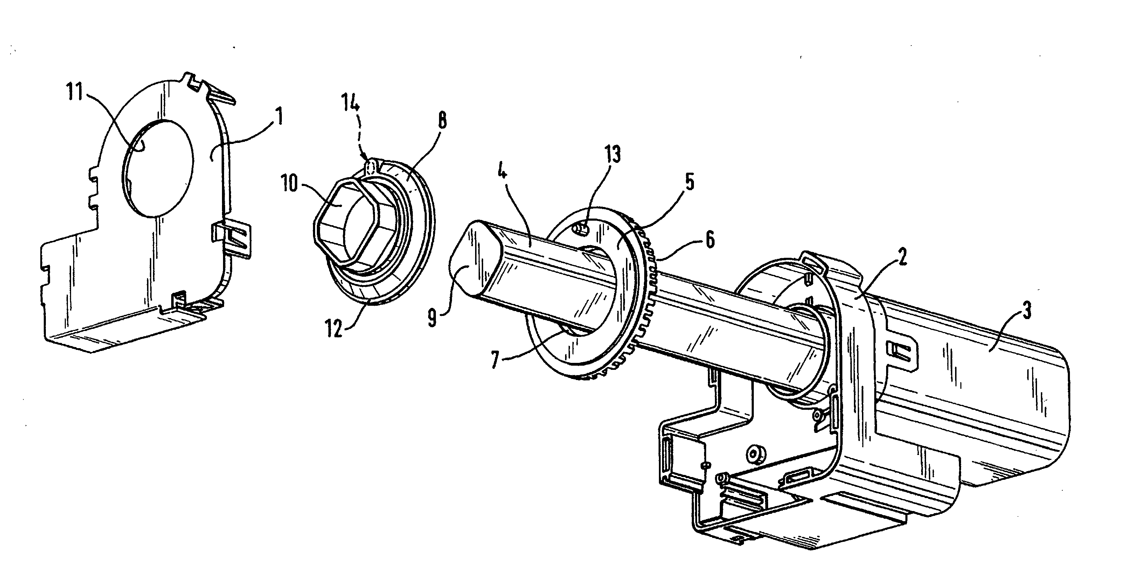

Ein Ausführungsbeispiel der Erfindung wird nachfolgend anhand der Zeichnung erläutert. In auseinandergezogener Darstellung zeigt die Figur den Deckel 1 eines Lenkwinkelsensors, mit dem das Sensorgehäuse 2 des Lenkwinkelsensors verschließbar ist. Einzelheiten hierzu können der DE-OS 19 60 19 64 oder 19 60 20 60 entnommen werden. Das Gehäuse 2 und der Deckel 1 sitzen fest auf einem andere Baueinheiten umfassenden integrierten Gehäuse 3 oder auch direkt auf der Lenksäule. Durch die Gehäuseteile 1,2 des Lenkwinkelsensors erstreckt sich die vielfach auch als Lenkstock bezeichnete Lenkspindel 4, über welche das von dem Lenkrad ausgeübte Drehmoment auf die Fahrzeugräder übertragen wird. Eine Codescheibe 5 mit einer Zahncodierung 6 ist am Boden des Gehäuses 2 drehbar gelagert. Durch die Ausformung mehrerer nacheinander folgender Zähne der Codierung 6 ist ein bestimmter Ort des Umfangs der Codescheibe und damit die Drehwinkellage der Codescheibe selbst eindeutig beschrieben. Mittels einer in der Zeichnung nicht dargestellten Abtasteinrichtung am Boden des Gehäuses 2 wird über die Codierung der jeweils gerade abgetastete Umfangsbereich und damit die Winkellage bestimmt. Für die Erfindung wichtig ist nun, daß die Mittenöffnung 7 einen Innendurchmesser aufweist, der erheblich größer ist als der lichte Durchmesser der Lenkspindel 4, so daß die Lenkspindel 4 sich in radialer Richtung gegenüber der in radialer Richtung ortsfesten Codescheibe bewegen kann. Damit werden keine radialen Kräfte von der Spindel auf die Codescheibe übertragen, was mit der Erfindung erreicht werden soll.

Um aber nun in tangentialer Richtung durch die Drehspindel 4 die Codescheibe 5 mitnehmen zu können, ist ein Ausgleichsstück 8 vorgesehen, welches drehfest mit der Lenkspindel 4 verbunden ist. Hierzu besitzt die Spindel einen im wesentlichen viereckigen Querschnitt 9, welchem der Querschnitt der Mittenöffnung 10 des Zwischenstücks 8 entspricht. Somit kann das Zwischenstück 8 auf die Lenkspindel 4 aufgesetzt und mit dieser drehfest verbunden werden. Dabei ist es durchaus möglich, daß das ausgleichende Zwischenstück in axialer Richtung verschieblich bleibt, so daß es sich beispielsweise in axialer Richtung nach unten auf der oberen Fläche der Codescheibe 5 abstützen kann. Die Bewegbarkeit des Ausgleichsstückes 8 kann weiterhin in axialer Richtung durch den Deckel 1 behindert werden, in dem der Durchmesser der Deckelöffnung kleiner ist als der Außenumfang der Konsole 12 am Ausgleichsstück 8. Zur vereinfachten Montage kann es zweckmäßig sein, das Zwischenstück 8 aus zwei miteinander verrastbaren Teilstücken zu bilden, die an die Lenkspindel 4 in geeigneter axialer Höhe angelegt und dann verrastet werden. Um über das Ausgleichsstück 8 die Codescheibe 5 antreiben zu können, ist das Ausgleichsstück 8 mit einem Langloch 14 versehen, welches sich in radialer Richtung erstreckt. In die so gebildete Ausnehmung taucht ein sich in axialer Richtung erstreckender Mitnahmezapfen 13 in das Langloch 14 ein, wobei die Seitenwände des Langlochs an der Mantelfläche des Mitnahmezapfens 13 angreifen und diesen in tangentialer Richtung mitnehmen. Auf diese Weise folgt die Codescheibe 5 über das Ausgleichsstück 8 mittelbar der Drehbewegung der Lenkspindel 4. Das Langloch 14 kann ein Durchgangsloch sein, es kann aber auch wie im vorliegenden Fall zum Deckel 1 hin verschlossen sein, so daß sich eine nach unten offene Ausnehmung mit der Kontur des Langlochs ergibt.

## Patentansprüche

1. Lenkwinkelsensor, bei dem eine mit der Lenkspindel (4) drehende Codescheibe (5) von einer Abtasteinrichtung abgetastet wird, welche gegenüber der Lenksäule ( 3) fixiert ist, wobei die Codescheibe (5) von der Lenkspindel (4) mittelbar über ein Ausgleichsstück (8) gedreht wird, welches mit der Lenkspindel (4) drehtest verbunden ist, **dadurch gekennzeichnet, dass** das Ausgleichsstück (8) in axialer Richtung geteilt ist und mit Rastmitteln derart versehen ist, dass die Teile des Ausgleichsstücks (8) an geeigneter Stelle der Lenkspindel (4) in radialer Richtung zusammengefügt und miteinander verrastet werden.

2. Lenkwinkelsensor nach Anspruch 1, **dadurch gekennzeichnet, dass** die Codescheibe (5) radial gesichert und drehbar in dem Gehäuse (2) des Lenkwinkelsensors gelagert ist, in dem auch die Abtasteinrichtung des Lenkwinkelsensors angeordnet ist.

3. Lenkwinkelsensor nach einem der vorangegangenen Ansprüche, **dadurch gekennzeichnet, dass** die Kupplung vom Ausgleichsstück (8) zur Codescheibe (5) derart ausgestaltet ist, dass eine Antriebskraft des Ausgleichsstücks (8) auf die Codescheibe (5) in tangentialer Richtung dagegen nicht aber in radialer bzw. radialer und axialer Richtung ausübbar ist.

4. Lenkwinkelsensor nach Anspruch 3, **dadurch gekennzeichnet, dass** an der Codescheibe (5) oder dem Ausgleichsstück (8) mindestens ein in vorzugsweise axialer Richtung weisender Vorsprung (13) vorgesehen ist, der in eine sich in radialer Richtung erstreckende Ausnehmung (14) in dem Ausgleichsstück (8) bzw. der Codescheibe (5) eingreift.

5. Lenkwinkelsensor nach Anspruch 4, **dadurch gekennzeichnet, dass** die Codescheibe (5) mit mindestens einem, vorzugsweise zwei exzentrisch angeordneten, sich in axialer Richtung erstreckenden Zapfen (13) versehen ist, denen in dem Ausgleichsstück (8) jeweils ein in radialer Richtung sich erstreckendes Langloch (14) zugeordnet ist.

6. Lenkwinkelsensor nach einem der vorangegangenen Ansprüche, **dadurch gekennzeichnet, dass** die Lenkspindel (4) zumindest abschnittsweise einen eckigen Querschnitt (9) besitzt, dem eine Durchgangsöffnung (10) mit entsprechendem Querschnitt in dem Ausgleichsstück (8) zugeordnet ist, über welches das Ausgleichsstück (8) mit der Lenkspindel (4) drehtest verbunden ist.

## Claims

1. Steering angle sensor, in which a code disc (5) rotating with the steering spindle (4) is scanned by a scanning device, which is fixed relative to the steering column (3), the code disc (5) being rotated by the steering spindle (4) indirectly via a compensation piece (8) which is non-rotatably connected to the steering spindle (4), **characterised in that** the compensation piece (8) is divided in the axial direction and is provided with latching means in such a way that the parts of the compensation piece (8) are joined in the radial direction at a suitable point of the steering spindle (4) and latched together.

2. Steering angle sensor according to claim 1, **characterised in that** the code disc (5) is radially secured and rotatably mounted in the housing (2) of the steering angle sensor, in which the scanning device of the steering angle sensor is also arranged.

3. Steering angle sensor according to either of the preceding claims, **characterised in that** the coupling from the compensation piece (8) to the code disc (5) is designed in such a way that a driving force of the compensation piece (8) can be exerted on the code disc (5) in the tangential direction, but not in the radial direction, or radial and axial direction.

4. Steering angle sensor according to claim 3, **characterised in that** at least one projection (13) preferably pointing in the axial direction is provided on the code disc (5) or on the compensation piece (8), the projection (13) engaging in a recess (14) extending in the radial direction in the compensation piece (8) or the code disc (5).

5. Steering angle sensor according to claim 4, **characterised in that** the code disc (5) is provided with at least one, preferably two eccentrically arranged journals (13) extending in the axial direction, with which a respective slot (14) extending in the radial direction is associated in the compensation piece (8).

6. Steering angle sensor according to any one of the preceding claims, **characterised in that** the steering spindle (4) has an angular cross-section (9), at least in portions, with which an opening (10) with a corresponding cross-section in the compensation piece (8) is associated, via which the compensation piece (8) can be connected in a non-rotatable manner to the steering spindle (4).

## Revendications

1. Détecteur d'angle de direction, pour lequel un disque de code (5) en rotation avec l'arbre de direction (4) est balayé par un dispositif de balayage qui est fixé en face de la colonne de direction (3), moyennant quoi l'arbre de direction (4) fait tourner le disque de code (5) de manière indirecte à l'aide d'une pièce de compensation (8) laquelle est reliée à l'arbre de direction (4) de manière à résister à la torsion, **caractérisé en ce que** la pièce de compensation (8) est divisée dans le sens axial et est pourvue de moyens de crantages de manière à ce que les pièces de la pièce de compensation (8) sont assemblées et encliquetées les unes avec les autres à un endroit adéquat de l'arbre de direction (4) dans le sens radial.

2. Détecteur d'angle de direction selon la revendication 1, **caractérisé en ce que** le disque de code (5) est bloqué radialement et est aménagé de manière à être rotatif dans le boîtier (2) du détecteur d'angle de direction, à l'intérieur duquel est également aménagé le dispositif de balayage du détecteur d'angle de direction.

3. Détecteur d'angle de direction selon l'une quelconque des revendications précédentes, **caractérisé en ce que** le dispositif d'accouplement est formé, depuis la pièce de compensation (8) jusqu'au disque de code (5), de manière à ce qu'une force de propulsion de la pièce de compensation (8) sur le disque de code (5) peut s'exercer en direction tangentielle et non par contre en direction radiale ou radiale et axiale.

4. Détecteur d'angle de direction selon la revendication 3, **caractérisé en ce que** sur le disque de code (5) ou sur la pièce de compensation (8) est prévue au moins une saillie (13) qui pointe de préférence en direction axiale, laquelle est en prise avec un évidement (14) qui s'étend dans le sens radial à l'intérieur de la pièce de compensation (8) ou respectivement du disque de code (5).

5. Détecteur d'angle de direction selon la revendication 4, **caractérisé en ce que** le disque de code (5) est pourvu avec au moins un, et de préférence deux tétons aménagés de manière excentrée et qui s'étendent en direction axiale, auxquels est affecté dans la pièce de compensation (8) respectivement un trou oblong (14) s'étendant en direction radiale.

6. Détecteur d'angle de direction selon l'une quelconque des revendications précédentes, **caractérisé en ce que** l'arbre de direction (4) possède, au moins par sections, une section transversale (9) angulaire à laquelle est affectée une ouverture de transit (10) avec une section transversale correspondante dans la pièce de compensation (8), par l'intermédiaire de laquelle la pièce de compensation (8) est reliée à l'arbre de direction (4) de manière à résister à la torsion.
